# EUROPÄISCHE PATENTSCHRIFT

(11) **EP 3 376 331 B1**
(45) Veröffentlichungstag und Bekanntmachung des Hinweises auf die Patenterteilung: **28.04.2021**
(21) Anmeldenummer: 18159437.5
(22) Anmeldetag: 01.03.2018
(51) Int. Cl.: G05D 1/02, B60Q 1/00

(54) **VERFAHREN ZUM BETRIEB EINES SICH SELBSTTÄTIG FORTBEWEGENDEN BODENBEARBEITUNGSGERÄTES**
METHOD FOR OPERATING AUTOMATICALLY MOVING SOIL PREPARATION EQUIPMENT
PROCÉDÉ DE FONCTIONNEMENT D'UN APPAREIL DE TRAITEMENT DE SOL MOBILE AUTOMATIQUE

(30) Priorität: 15.03.2017 DE 102017105540
(43) Veröffentlichungstag der Anmeldung: 19.09.2018
(73) Patentinhaber: Vorwerk & Co. Interholding GmbH, 42275 Wuppertal (DE)
(72) Erfinder: Ortmann, Roman, 50354 Hürth (DE)
(74) Vertreter: Müller, Enno

(56) Entgegenhaltungen:
- EP-A2- 1 936 463
- WO-A2-2016/180796

## Beschreibung

### Gebiet der Technik

Die Erfindung betrifft ein Verfahren zum Betrieb eines sich selbsttätig innerhalb einer Umgebung fortbewegenden Bodenbearbeitungsgerätes, wobei eine Steuer- und Auswerteeinrichtung des Bodenbearbeitungsgerätes den Betriebsstatus des Bodenbearbeitungsgerätes überwacht, einen Fehlerzustand des Bodenbearbeitungsgerätes erkennt und im Falle des Auftretens eine Ausgabe eines Fehlerzustands ein Informationssignals veranlasst.

Des Weiteren betrifft die Erfindung ein sich selbsttätig innerhalb einer Umgebung fortbewegendes Bodenbearbeitungsgerät mit einer Steuer- und Auswerteeinrichtung, welche eingerichtet ist, einen Betriebsstatus des Bodenbearbeitungsgerätes zu überwachen, einen Fehlerzustand des Bodenbearbeitungsgerätes zu erkennen und im Falle des Auftretens eines Fehlerzustands eine Ausgabe eines Informationssignals zu veranlassen.

### Stand der Technik

Verfahren und Bodenbearbeitungsgeräte der vorgenannten Art sind im Stand der Technik hinreichend bekannt.

Beispielsweise sind aus der EP 1 936 463 A2 als Saugroboter und/oder Wischroboter ausgebildete Bodenbearbeitungsgeräte bekannt, die selbsttätig innerhalb einer Umgebung verfahren können. Dazu verfügen diese über eine Navigations- und Selbstlokalisierungseinrichtung, mittels welcher eine Umgebungskarte des Bodenbearbeitungsgerätes erstellt und eine Eigenposition des Bodenbearbeitungsgerätes erkannt werden kann. Die Navigations- und Selbstlokalisierungseinrichtung liest Messdaten aus, welche das Bodenbearbeitungsgerät innerhalb der Umgebung detektiert hat. Beispielsweise kann das Bodenbearbeitungsgerät einen Abstandssensor und einen Odometriesensor aufweisen, welche Abstände zu Hindernissen bzw. zurückgelegte Strecken detektieren. Anhand der erstellten Umgebungskarte sowie aktuell aufgenommener Messdaten kann sich das Bodenbearbeitungsgerät innerhalb der Umgebung orientieren.

Sobald ein Fehlerzustand auftritt, d. h. sich das Bodenbearbeitungsgerät beispielsweise zwischen Hindernissen eingeklemmt hat, einen zu geringen Ladezustand eines Akkumulators aufweist oder auch einen Softwareabsturz beispielsweise der Navigations- und Selbstlokalisierungssoftware feststellt, wird ein Informationssignal an einen Nutzer des Bodenbearbeitungsgerätes ausgegeben, welches den Nutzer über den Fehlerzustand informiert. Das Informationssignal ist üblicherweise eine Tonfolge, die den Nutzer auf das Bodenbearbeitungsgerät aufmerksam macht. Grundsätzlich ist es dem Nutzer anhand dieses akustischen Informationssignals möglich, das Bodenbearbeitungsgerät aufzufinden, wenn sich dieses beispielsweise an einer nicht einsehbaren Stelle, wie beispielsweise unterhalb eines Bettes, Schranks oder dergleichen, befindet.

Nachteilig bei der Ausgabe von Tonfolgen ist jedoch, dass diese insbesondere bei regelmäßiger Ausgabe störend auf den Nutzer und/oder andere Personen in der Umgebung des Bodenbearbeitungsgerätes wirken können. Auch ist das Auffinden des Bodenbearbeitungsgerätes schwierig, wenn die Tonfolgen in zwar regelmäßigen, aber relativ weit auseinanderliegenden Zeitabschnitten emittiert werden. Nicht zuletzt ist es auch für schwerhörige oder gar gehörlose Personen schwierig, von dem Informationssignal Notiz zu nehmen.

### Zusammenfassung der Erfindung

Ausgehend von dem vorgenannten Stand der Technik ist es daher Aufgabe der Erfindung, ein Bodenbearbeitungsgerät bzw. ein Verfahren zu dessen Betrieb zu schaffen, bei welchem ein Nutzer auf alternative Art und Weise über einen Fehlerzustand informiert wird. Insbesondere ist es Aufgabe, das Bodenbearbeitungsgerät im Falle des Auftretens eines Fehlerzustands leichter auffinden zu können.

Zur Lösung der vorgenannten Aufgabe wird zunächst ein Verfahren gemäss Anspruch 1 zum Betrieb eines sich selbsttätig fortbewegenden Bodenbearbeitungsgerätes vorgeschlagen, bei welchem eine optische Signalausgabeeinrichtung des Bodenbearbeitungsgerätes das optische Informationssignal emittiert, wobei das optische Informationssignal eine Richtungsangabe darstellende Lichtprojektion erzeugt, wobei die Lichtprojektion auf einem Projektionsort innerhalb der Umgebung des aktuellen Standortes des Bodenbearbeitungsgerätes gerichtet wird, und wobei die Richtungsangabe von dem Projektionsort innerhalb der Umgebung in Richtung des aktuellen Standortes des Bodenbearbeitungsgerätes zeigt.

Erfindungsgemäß wird ein Fehlerzustand des Bodenbearbeitungsgerätes nun nicht mehr mittels eines akustischen Signals, beispielsweise einer Tonfolge, angezeigt, sondern durch ein optisches Informationssignal, welches von der Signalausgabeeinrichtung an einen Projektionsort innerhalb der Umgebung des Bodenbearbeitungsgerätes projiziert wird. Dadurch können auch schwerhörige oder gehörlose Menschen den aktuellen Standort des Bodenbearbeitungsgerätes besonders einfach erkennen. In dem Fall, dass das Bodenbearbeitungsgerät einen Fehlerzustand aufweist, der beispielsweise eine Weiterfahrt verhindert, kann der Nutzer das optische Informationssignal zurückverfolgen und gelangt somit zu dem Standort des Bodenbearbeitungsgerätes. Das optisehe Informationssignal enthält einen Richtungshinweis, aus welchem der Nutzer eine Information darüber entnehmen kann, in welcher Raumrichtung sich das Bodenbearbeitungsgerät befindet. Beispielsweise kann die Richtungsangabe die Darstellung eines Pfeils beinhalten, welcher ausgehend von dem Projektionsort auf das Bodenbearbeitungsgerät zeigt. Der Nutzer muss somit nur in die von dem Pfeil angezeigte Richtung schauen und kann somit das Bodenbearbeitungsgerät beispielsweise auch unter einem Bett, einem Schrank oder dergleichen auffinden. Der Projektionsort, an welchen das Informationssignal projiziert wird, kann beispielsweise ein Teilbereich einer Bodenfläche sein, eine Front eines Möbelstückes, ein Teilbereich einer Wand oder dergleichen.

Des Weiteren wird vorgeschlagen, dass das Informationssignal emittiert wird, wenn die Steuer- und Auswerteeinrichtung ein Einklemmen, Behindern und/oder Blockieren des Bodenbearbeitungsgerätes, einen Ladezustand eines Akkumulators unterhalb eines definierten Mindestladezustands und/oder einen fehlerhaften Softwarestatus erkennt. Diese Fehlerzustände behindern oder verhindern eine Weiterfahrt des Bodenbearbeitungsgerätes innerhalb der Umgebung oder zumindest einen optimalen Bearbeitungserfolg des Bodenbearbeitungsgerätes. Zu den Fehlerzuständen gehören zum einen Zustände, in welchen sich das Bodenbearbeitungsgerät unter einem Möbelstück, wie beispielsweise einem Bett, einem Sofa, einer Kommode oder dergleichen festgefahren hat und sich dort aus eigener Kraft nicht mehr lösen kann. Zum anderen kann ein Fehlerzustand eine Situation betreffen, in welcher eine Antriebseinrichtung und/oder ein angetriebenes Rad des Bodenbearbeitungsgerätes blockiert ist und somit eine Fortbewegung verhindert oder zumindest beeinträchtigt. Des Weiteren kann das Bodenbearbeitungsgerät auch durch Hindernisse blockiert werden, welche das Bodenbearbeitungsgerät zwar nicht einklemmen, jedoch in seiner Weiterfahrt behindern, und zwar so, dass das Bodenbearbeitungsgerät nicht selbst aus dieser Situation herausnavigieren kann. Bei diesen Fehlerzuständen kann es erforderlich sein, dass der Nutzer das Bodenbearbeitungsgerät aus der Situation entfernt. Weitere Fehlerzustände sind beispielsweise zu geringe Ladezustände eines Akkumulators des Bodenbearbeitungsgerätes, ein Fehler an einer Betriebssoftware des Bodenbearbeitungsgerätes, welcher eine Fortbewegung und/oder einen ordnungsgemäßen Betrieb des Bodenbearbeitungsgerätes verhindert. Die vorgenannte Aufzählung ist nicht abschließend zu verstehen. Vielmehr sind auch andere Fehlerzustände denkbar, welche ein Eingreifen des Nutzers erfordern oder zumindest empfehlen.

Des Weiteren kann vorgesehen sein, dass die Signalausgabeeinrichtung das Informationssignal automatisch unmittelbar nach Erkennen eines Fehlerzustands emittiert. Gemäß dieser Ausgestaltung wird unmittelbar dann, wenn die Steuer- und Auswerteeinrichtung des Bodenbearbeitungsgerätes einen Fehlerzustand erkennt, ein Informationssignal von der Signalausgabeeinrichtung ausgesendet. Der Nutzer des Bodenbearbeitungsgerätes muss keine Maßnahmen ergreifen, um ein Informationssignal anzufordern. Vielmehr wird das Informationssignal automatisch in die Umgebung des Bodenbearbeitungsgerätes projiziert, beispielsweise auf einen Fußboden oder an eine Wand oder ein Möbelstück, so dass der Nutzer bei Anwesenheit in dieser Umgebung das Informationssignal bemerkt und auf einen Fehlerzustand des Bodenbearbeitungsgerätes aufmerksam wird. Sodann kann der Nutzer anhand der in dem Informationssignal vorhandenen Richtungsangabe den Standort des Bodenbearbeitungsgerätes ermitteln, das Bodenbearbeitungsgerät auffinden und den Fehlerzustand beheben.

Alternativ wird vorgeschlagen, dass die Steuer- und Auswerteeinrichtung im Falle eines Fehlerzustands eine Nachricht über den Fehlerzustand an ein in Kommunikationsverbindung mit dem Bodenbearbeitungsgerät stehendes externes Gerät sendet, wobei der Nutzer mittels des externen Gerätes manuell eine Ausgabe eines Informationssignals durch die Signalausgabeeinrichtung des Bodenbearbeitungsgerätes veranlasst. Gemäß dieser Ausgestaltung wird das Informationssignal nicht automatisch emittiert, sobald ein Fehlerzustand des Bodenbearbeitungsgerätes festgestellt wird, sondern nur dann, wenn hierzu auch eine konkrete Anforderung des Nutzers des Bodenbearbeitungsgerätes vorliegt. Zunächst wird der Nutzer bei Auftreten eines Fehlerzustandes mittels einer Nachricht über den Fehlerzustand informiert. Sodann kann er entscheiden, ob ein optisches Informationssignal emittiert werden soll oder nicht. Die Nachricht über den Fehlerzustand wird vorteilhaft an ein mobiles Gerät des Nutzers gesendet, beispielsweise ein Mobiltelefon, ein Tablet-Computer, ein Laptop oder dergleichen. Alternativ kann das Informationssignal jedoch auch an einen lokalen PC, einen entfernten Server oder dergleichen gesendet werden. Die Signalausgabeeinrichtung wird somit nur dann betrieben, wenn der Nutzer dies auch konkret anfordert. Hierdurch kann Energie für unnötige bzw. ungewünschte Lichtprojektionen gespart werden. Das externe Gerät des Nutzers kann eine mit dem Bodenbearbeitungsgerät in Kommunikationsverbindung stehende Applikation aufweisen, welche dem Nutzer einen Fehlerzustand anzeigt. In diesem Zusammenhang kann vorgesehen sein, dass die Nachricht nicht nur eine Information über das Auftreten eines Fehlerzustandes aufweist, sondern zusätzlich weitere Informationen, beispielsweise eine Information über die Art des Fehlerzustandes, einen Vorschlag zum Beheben des Fehlerzustandes, eine Information darüber, seit wann der Fehlerzustand besteht und dergleichen. Im Gegenzug kann der Nutzer mittels der Applikation des externen Gerätes ein Signal an das Bodenbearbeitungsgerät senden, welches die Ausgabe eines Informationssignals veranlasst, so dass die Signalausgabeeinrichtung des Bodenbearbeitungsgerätes erst dann ein Informationssignal in die Umgebung projiziert, wenn der Nutzer für die Suche nach dem Bodenbearbeitungsgerät bereit ist und/oder sich in der Umgebung des Bodenbearbeitungsgerätes befindet.

Des Weiteren wird vorgeschlagen, dass die Steuer- und Auswerteeinrichtung eine aktuelle Position und Orientierung des Bodenbearbeitungsgerätes anhand einer Umgebungskarte erkennt, Umgebungsinformationen im Bereich des Bodenbearbeitungsgerätes auswertet und das optische Informationssignal an einen Projektionsort der Umgebung projiziert, welcher bezogen auf eine Größe und Richtung der Lichtprojektion frei von Hindernissen ist und/oder aus einer Vogelperspektive einsehbar ist. Diese Ausführung eignet sich insbesondere in Verbindung mit einer Navigations- und Selbstlokalisierungseinrichtung des Bodenbearbeitungsgerätes, welche eine Umgebungskarte der Umgebung des Bodenbearbeitungsgerätes erstellt. Zu diesem Zweck weist das Bodenbearbeitungsgerät beispielsweise einen oder eine Mehrzahl von Sensoren auf, beispielsweise eine Abstandsmesseinrichtung und/oder eine Odometrie-Messeinrichtung. Anhand der gemessenen Abstände zu Raumbegrenzungen, Hindernissen und dergleichen kann eine Umgebungskarte der Umgebung erstellt werden, in welcher die Positionen der Hindernisse und/oder Raumbegrenzungen notiert sind. Auf diese von dem Bodenbearbeitungsgerät selbst erstellte Karte, oder auch eine dem Bodenbearbeitungsgerät von einer anderen Einrichtung übermittelte Umgebungskarte kann die Steuer- und Auswerteeinrichtung zugreifen, um einen geeigneten Projektionsort für die Projektion des optischen Informationssignals zu ermitteln. Hierzu wählt die Steuer- und Auswerteeinrichtung einen Projektionsort aus, welcher frei von Hindernissen ist und/oder für den Nutzer des Bodenbearbeitungsgerätes einsehbar ist. Im Sinne von "frei von Hindernissen" wird des Weiteren eine solche Teilfläche eines Fußbodens, einer Wandfläche, eines Hindernisses oder dergleichen verstanden, welche zum einen groß genug ist, um das optische Informationssignal ausreichend sichtbar zu projizieren, und zum anderen nicht durch andere Hindernisse verdeckt ist, beispielsweise durch einen über einem Teilbereich eines Fußbodens stehenden Tisch, Stuhl oder dergleichen. Der Projektionsort sollte aus der Vogelperspektive einsehbar sein, so dass ein in der Umgebung stehender Nutzer den Projektionsort einsehen kann und somit auch die Richtungsangabe erkennen kann.

Insbesondere wird vorgeschlagen, dass die Steuer- und Auswerteeinrichtung eine Signalausgabeeinrichtung aus einer Mehrzahl von Signalausgabeeinrichtungen des Bodenbearbeitungsgerätes auswählt, wobei die ausgewählte Signalausgabeeinrichtung nächstgelegen zu dem Projektionsort ist. Das Bodenbearbeitungsgerät weist eine Mehrzahl von Signalausgabeeinrichtungen auf, welche beispielsweise entlang eines Umfangs des Bodenbearbeitungsgerätes angeordnet sind. Die Steuer- und Auswerteeinrichtung wählt aus der Mehrzahl dieser Signalausgabeeinrichtungen eine, oder auch mehrere, Signalausgabeeinrichtungen auf, welche einem optimalen Projektionsort am nächsten liegen bzw. am besten dazu geeignet sind, das Informationssignal an diesen Projektionsort zu projizieren. Die Steuer- und Auswerteeinrichtung hat dazu zum einen Kenntnis über die Positionen und Orientierungen der Signalausgabeeinrichtungen an dem Bodenbearbeitungsgerät, und zum anderen über den aktuellen Standort und die aktuelle Orientierung des Bodenbearbeitungsgerätes innerhalb der Umgebung, so dass zum einen ein geeigneter Projektionsort zur Darstellung des die Richtungsangabe enthaltenen Informationssignals und zum anderen die für die Projektion aktuell am besten geeignete, d. h. positionierte, Signalausgabeeinrichtung ermittelt werden kann.

Zudem wird vorgeschlagen, dass die Signalausgabeeinrichtung für die Projektion des Informationssignals an den Projektionsort relativ zu einem Gehäuse des Bodenbearbeitungsgerätes verlagert wird und/oder dass das von einer Lichtquelle der Signalausgabeeinrichtung emittierte Informationssignal mittels einer optischen Umlenkeinrichtung umgelenkt wird. Um das Informationssignal an den gewünschten Projektionsort der Umgebung zu projizieren, kann die Signalausgabeeinrichtung beispielsweise auf einem justierbaren Träger an dem Gehäuse des Bodenbearbeitungsgerätes angeordnet sein. Alternativ kann die Signalausgabeeinrichtung bzw. eine Lichtquelle derselben fest mit dem Gehäuse des Bodenbearbeitungsgerätes verbunden sein, wobei die Signalausgebeeinrichtung bzw. die Lichtquelle jedoch mit einer optischen Umlenkeinrichtung kombiniert ist, beispielsweise einem schwenkbaren Spiegel, einem Prisma oder dergleichen. Die Umlenkeinrichtung lenkt das Informationssignal ausgehend von der Lichtquelle der Signalausgabeeinrichtung zu dem gewünschten Projektionsort.

Neben dem zuvor beschriebenen Verfahren zum Betrieb eines Bodenbearbeitungsgerätes wird mit der Erfindung des Weiteren ein sich selbsttätig innerhalb einer Umgebung fortbewegendes Bodenbearbeitungsgerät mit einer Steuer-und Auswerteeinrichtung gemäss Anspruch 8 vorgeschlagen, wobei die Steuer- und Auswerteeinrichtung eingerichtet ist, einen Betriebsstatus des Bodenbearbeitungsgerätes zu überwachen, einen Fehlerzustand des Bodenbearbeitungsgerätes zu erkennen und im Falle des Auftretens eines Fehlerzustands eine Ausgabe eines Informationssignals zu veranlassen, wobei das Bodenbearbeitungsgerät eine optische Signalausgabeeinrichtung aufweist, welche eingerichtet ist, das optische Informationssignal zu emittieren, wobei das optische Informationssignal eine eine Richtungsangabe darstellende Lichtprojektion erzeugt, wobei die Lichtprojektion auf einen Projektionsort innerhalb der Umgebung des aktuellen Standortes des Bodenbearbeitungsgerätes gerichtet wird, und wobei die Richtungsangabe von einem Projektionsort innerhalb der Umgebung in Richtung des aktuellen Standortes des Bodenbearbeitungsgerätes zeigt.

Das vorgeschlagene Bodenbearbeitungsgerät ist dadurch ausgebildet, ein zuvor beschriebenes Verfahren auszuführen, bei welchem ein Informationssignal, welches eine Richtungsangabe zu einem Bodenbearbeitungsgerät enthält, an einen Projektionsort projiziert wird. Das Bodenbearbeitungsgerät weist zu diesem Zweck eine optische Signalausgabeeinrichtung auf, welche üblicherweise zumindest eine Lichtquelle aufweist, beispielsweise eine LED oder einen Laser. Die Signalausgabeeinrichtung ist so ausgebildet, dass diese einen Lichtstrahl bzw. Lichtkegel so auf den Projektionsort projiziert, dass die in dem optischen Informationssignal enthaltene Richtungsangabe für einen Nutzer des Bodenbearbeitungsgerätes erkennbar ist. Bei Betrachtung der Lichtprojektion erhält der Benutzer einen Hinweis über die Richtung, in welcher er den aktuellen Standort des Bodenbearbeitungsgerätes auffindet. Die Richtungsangabe ist beispielsweise ein Pfeil, welcher ausgehend von dem Projektionsort in Richtung des Bodenbearbeitungsgerätes zeigt, beispielsweise unter ein Möbelstück, einen von dem Nutzer aktuell nicht einsehbaren Teilbereich der Umgebung oder dergleichen.

Insbesondere wird vorgeschlagen, dass die Signalausgabeeinrichtung eine Vielzahl von Lichtquellen aufweist und/oder dass die Signalausgabeeinrichtung eine Lichtquelle mit einer veränderlichen Blende aufweist. In dem erstgenannten Fall kann die Signalausgabeeinrichtung beispielsweise ein LED-Array aufweisen, dessen LEDs zur Darstellung einer Richtungsangabe angesteuert werden können. Das durch die Signalausgabeeinrichtung erzeugte Informationssignal kann dann mittels optischer Elemente auf den gewünschten Projektionsort fokussiert, kollimiert und/oder umgelenkt werden, so dass das Informationssignal mit der darin enthaltenen Richtungsangabe für den Nutzer des Bodenbearbeitungsgerätes erkennbar wird. Alternativ kann die Signalausgabeeinrichtung nur eine einzige Lichtquelle aufweisen, welcher eine veränderliche Blende zur Darstellung unterschiedlicher Informationssignale bzw. darin enthaltener Richtungsangaben zugeordnet ist. Die Blende erzeugt beispielsweise den Umriss eines Pfeils innerhalb des auf den Projektionsort projizierten Informationssignals.

Des Weiteren wird vorgeschlagen, dass die Signalausgabeeinrichtung relativ zu einem Gehäuse des Bodenbearbeitungsgerätes verlagerbar ist, und/oder dass die Signalausgabeeinrichtung eine relativ zu dem Gehäuse verlagerbare optische Umlenkeinrichtung zum Umlenken des emittierten Informationssignals an den Projektionsort aufweist. Die Signalausgabeeinrichtung ist in beiden Fällen ausgebildet, das Informationssignal an unterschiedliche Projektionsorte der Umgebung zu projizieren, indem die Signalausgabeeinrichtung bzw. die Umlenkeinrichtung verlagert, beispielsweise relativ zu dem Gehäuse des Bodenbearbeitungsgerätes verschwenkt, wird. Beispielsweise kann die Signalausgabeeinrichtung auf einem beweglichen Träger des Bodenbearbeitungsgerätes montiert sein, wobei der Träger vorteilhaft motorisch verlagerbar und mittels der Steuer- und Auswerteeinrichtung ansteuerbar ist. Durch die Verlagerung des Trägers ist das Informationssignal an unterschiedliche Projektionsorte projizierbar. Des Weiteren kann eine Lichtquelle der Signalausgabeeinrichtung beispielsweise auch unbeweglich an dem Gehäuse des Bodenbearbeitungsgerätes montiert sein und in Kombination mit einer verlagerbaren Umlenkeinrichtung verwendet werden, welche das Informationssignal, welches von der Lichtquelle emittiert wurde, an einen gewünschten Projektionsort projiziert. Die verlagerbare Umlenkeinrichtung kann beispielsweise ein verlagerbares optisches Element, wie ein Spiegel, ein Prisma oder dergleichen sein.

Des Weiteren gelten für das erfindungsgemäße Bodenbearbeitungsgerät auch die zuvor in Bezug auf das Verfahren vorgeschlagenen Merkmale und Vorteile. Insbesondere kann das Bodenbearbeitungsgerät eine Navigations- und Selbstlokalisierungseinrichtung aufweisen, welche eine Umgebungskarte der Umgebung erstellt. In der Umgebungskarte kann die Steuer- und Auswerteeinrichtung den optimalen Projektionsort auswählen und gegebenenfalls zusätzlich eine von mehreren möglichen Signalausgabeeinrichtungen, welche geeignet ist, das Informationssignal an den ausgewählten Projektionsort zu projizieren.

Des Weiteren wird ein Set aus einem Bodenbearbeitungsgerät und einem externen Gerät des Nutzers des Bodenbearbeitungsgerätes vorgeschlagen, wobei das Bodenbearbeitungsgerät und das externe Gerät derart in Kommunikationsverbindung miteinander stehen, dass die Steuer- und Auswerteeinrichtung des Bodenbearbeitungsgerätes eine Nachricht über einen Fehlerzustand an das externe Gerät sendet, wobei die Nachricht auf beispielsweise einem Display des externen Gerätes angezeigt wird und wobei der Nutzer mittels des externen Gerätes manuell eine Ausgabe eines Informationssignals durch die Signalausgabeeinrichtung des Bodenbearbeitungsgerätes veranlassen kann. Das externe Gerät dient somit als Fernsteuerungseinrichtung für das Bodenbearbeitungsgerät. Das Set aus dem Bodenbearbeitungsgerät und dem externen Gerät ist so ausgebildet, dass der Nutzer das Bodenbearbeitungsgerät auffinden und einen Fehlerzustand beheben kann, auch wenn das Bodenbearbeitungsgerät aktuell nicht von dem Standort des Nutzer aus zu sehen ist.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät innerhalb einer Umgebung mit einer Mehrzahl von Hindernissen,
- Fig. 2: eine perspektivische Ansicht des Bodenbearbeitungsgerätes,
- Fig. 3: die Umgebung gemäß Figur 1 mit dem Bodenbearbeitungsgerät während des Auftretens eines Fehlerzustandes,
- Fig. 4: eine Seitenansicht des Bodenbearbeitungsgerätes während eines Fehlerzustands,
- Fig. 5: einen Umgebungsteilbereich der Umgebung mit einer eine Richtungsangabe darstellenden Lichtprojektion,
- Fig. 6: ein externes Gerät, auf welchem eine Umgebungskarte während eines Fehlerzustandes des Bodenbearbeitungsgerätes angezeigt ist.

### Beschreibung der Ausführungsformen

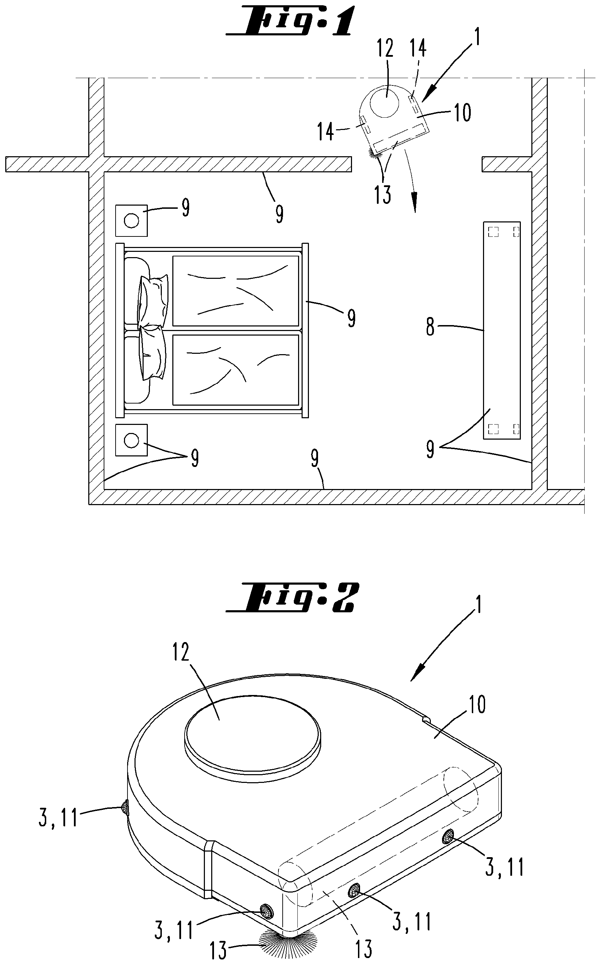

Figur 1 zeigt eine Umgebung, welche hier einen Teilbereich einer Wohnung darstellt. Innerhalb der Umgebung befindet sich ein Bodenbearbeitungsgerät 1, welches hier beispielsweise als sich selbsttätig fortbewegender Saugroboter ausgebildet ist. Das Bodenbearbeitungsgerät 1 verfügt über zwei Reinigungselemente 13, nämlich eine unterhalb eines Gehäuses 10 des Bodenbearbeitungsgerätes 1 angeordnete Borstenwalze und eine an einem Eckbereich des Gehäuses 10 angeordnete Seitenbürste, mittels welcher insbesondere Übergangsbereiche zwischen einem Fußboden und einer Wand gereinigt werden können. Das Bodenbearbeitungsgerät 1 verfügt über Räder 14, welche motorisch angetrieben sind und somit zur Fortbewegung des Bodenbearbeitungsgerätes 1 innerhalb der Umgebung dienen.

Die Umgebung weist eine Vielzahl von Hindernissen 9 auf, welche hier beispielsweise Raumbegrenzungen, ein Schrank, ein Bett und zwei Nachttische sind. Die Hindernisse 9 sind zumindest zum Teil so ausgestaltet, dass das Bodenbearbeitungsgerät 1 bei einer Verfahrbewegung unter diese gelangen kann.

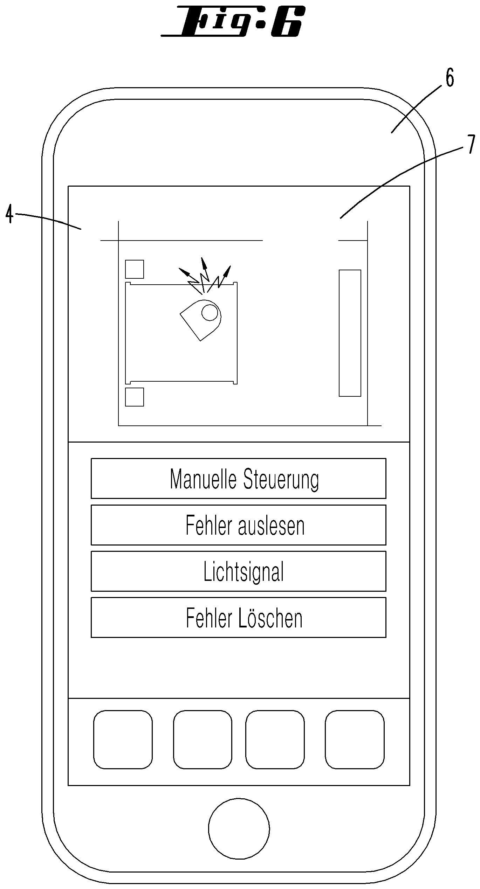

Das Bodenbearbeitungsgerät 1 weist eine Navigations- und Selbstlokalisierungseinrichtung (nicht dargestellt) auf, welche Daten einer Abstandsmesseinrichtung 12 des Bodenbearbeitungsgerätes 1 ausliest, die hier beispielsweise eine Triangulationsmesseinrichtung umfasst. Mittels der Abstandsmesseinrichtung 12 werden Abstände zu den Hindernissen 9 ermittelt und zu einer Umgebungskarte 7 (siehe Figur 6) kombiniert. In der Umgebungskarte 7 sind die Hindernisse 9 und auch der aktuelle Standort des Bodenbearbeitungsgerätes 1 enthalten. Während der Fortbewegung des Bodenbearbeitungsgerätes 1 wird die Umgebungskarte 7 stetig aktualisiert. Die Navigations- und Selbstlokalisierungseinrichtung steht in Kommunikationsverbindung mit einer Steuer- und Auswerteeinrichtung des Bodenbearbeitungsgerätes 1, welche den Betriebsstatus des Bodenbearbeitungsgerätes 1 überwacht, einen Fehlerzustand des Bodenbearbeitungsgerätes 1 erkennen kann und im Falle des Auftretens eines Fehlerzustands eine Ausgabe eines Informationssignals 2 veranlassen kann, durch welches ein Nutzer des Bodenbearbeitungsgerätes 1 über den Fehlerzustand informiert wird.

Figur 2 zeigt das Bodenbearbeitungsgerät 1 in einer perspektivischen Ansicht von außen. Das Bodenbearbeitungsgerät 1 weist eine Mehrzahl von Signalausgabeeinrichtungen 3 auf, welche entlang des Umfangs des Gehäuses 10 angeordnet sind. Jede Signalausgabeeinrichtung 3 weist hier eine Mehrzahl von Lichtquellen 11 auf, welche nach der Art eines Arrays nebeneinander und untereinander angeordnet sind. Die Lichtquellen 11 der jeweiligen Signalausgabeeinrichtung 3 können mittels der Steuer- und Auswerteeinrichtung so gesteuert werden, dass bestimmte Lichtquellen 11 der jeweiligen Signalausgabeeinrichtung 3 einen Lichtstrahl emittieren, so dass das von dem Array insgesamt emittierte Informationssignal 2 wie bei einem handelsüblichen LED-Fernseher als bildliche Darstellung entsteht. Den Lichtquellen 11 kann dabei zusätzlich ein optisches Element zugeordnet sein, welches das optische Informationssignal 2 fokussiert und eine darin enthaltene Information für einen Nutzer lesbar macht. Obwohl dies in Figur 2 nicht dargestellt ist, kann das Bodenbearbeitungsgerät 1 auch zusätzlich einen verlagerbaren Träger für die Signalausgabeeinrichtung 3 aufweisen, so dass die Emissionsrichtung des Informationssignals 2 variiert werden kann.

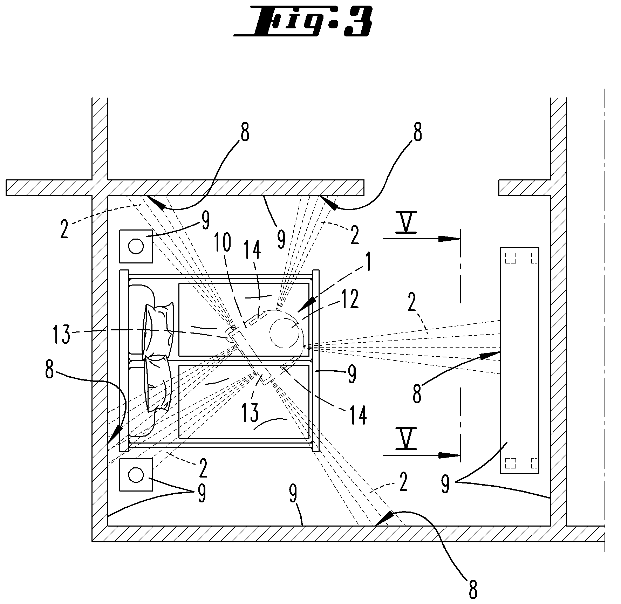

Figur 3 zeigt die in Figur 1 dargestellte Umgebung, in welcher sich das Bodenbearbeitungsgerät 1 unter einem Hindernis 9, hier einem Bett, eingeklemmt hat. Das Einklemmen erfolgt beispielsweise aufgrund eines unter dem Bett herunterhängenden Lattenrostes, welches einen Höhenunterschied zwischen dem Bodenbearbeitungsgerät 1 und dem Bett ändert. In dieser Situation erkennt die Steuer- und Auswerteeinrichtung des Bodenbearbeitungsgerätes 1 einen Fehlerzustand des Bodenbearbeitungsgerätes 1, nämlich ein Einklemmen, bei welchem eine Fortbewegung des Bodenbearbeitungsgerätes 1 aus eigenem Antrieb nicht mehr möglich ist. Um einen Nutzer des Bodenbearbeitungsgerätes 1 über diesen Fehler zu informieren und dem Nutzer gleichzeitig einen Hinweis auf den aktuellen Standort des Bodenbearbeitungsgerätes 1 zu geben, emittieren die Signalausgabeeinrichtungen 3 des Bodenbearbeitungsgerätes 1 Informationssignale 2 an mehrere Projektionsorte 8 der Umgebung, hier beispielsweise an Hindernisse 9, wie einen Schrank und Raumbegrenzungen (Wänden), oder auf eine Bodenfläche. Die Informationssignale 2 erstrecken sich ausgehend von dem Bodenbearbeitungsgerät 1 außerhalb des Umrisses des das Bodenbearbeitungsgerät 1 verdeckenden Bettes. Dadurch kann ein Nutzer auf das Informationssignal 2 aufmerksam werden.

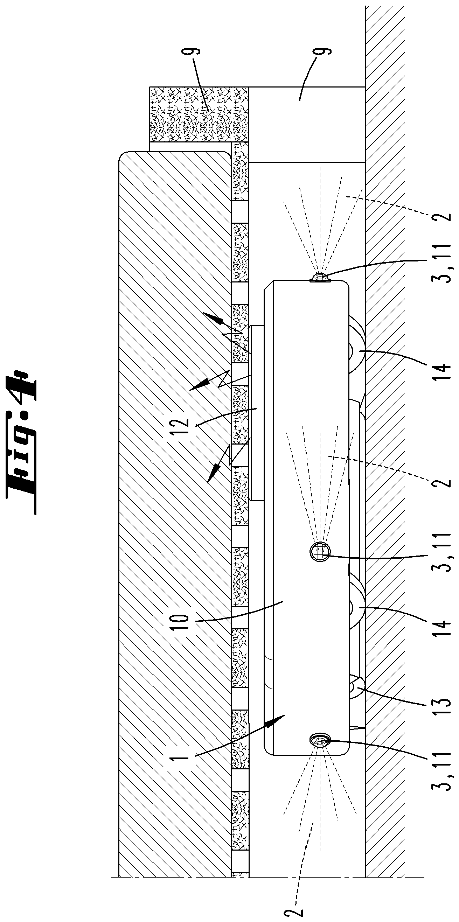

Figur 4 zeigt das Bodenbearbeitungsgerät 1 unterhalb des Hindernisses 9, nämlich unterhalb des Bettes, wobei das Gehäuse 10 in Kontakt mit dem Hindernis 9 steht und aufgrund der auftretenden Reibkraft nicht aus eigener Antriebskraft weiter verfahren kann. Das Bodenbearbeitungsgerät 1 weist somit einen Fehlerzustand durch Einklemmen unterhalb des Hindernisses 9 auf. Nachdem die Steuer- und Auswerteeinrichtung des Bodenbearbeitungsgerätes 1 den Fehlerzustand erkannt hat, beispielsweise weil bei Aufbringen einer Antriebskraft auf die Räder 14 keine Fortbewegung des Bodenbearbeitungsgerätes 1 mittels der Abstandsmesseinrichtung 12 festzustellen ist, veranlasst die Steuer- und Auswerteeinrichtung die Signalausgabeeinrichtungen 3, jeweils ein Informationssignal 2 in die Umgebung zu projizieren.

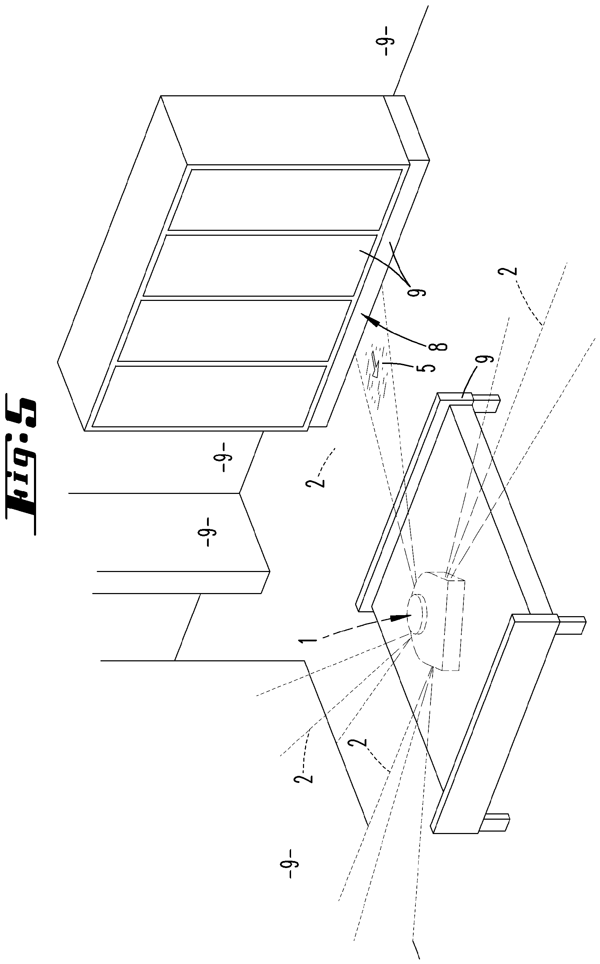

Figur 5 zeigt eine Umgebung wie grundsätzlich schon in Figur 3 dargestellt ist, mit einem hier auf den Boden projizierten Informationssignal 2. Auf dem Boden ist damit ein Projektionsort 8 geschaffen, auf welchem das Informationssignal 2 dargestellt ist bzw. sichtbar wird. Das Informationssignal 2 weist eine Richtungsangabe 5, nämlich hier einen Pfeil, auf, welcher in Richtung des aktuellen Standortes des Bodenbearbeitungsgerätes 1 unterhalb des Bettes weist. Alternativ könnte ein solches Informationssignal 2 anstatt auf einen Boden oder eine Bodenfläche auch auf ein Hindernis 9 in der Umgebung projiziert werden. Der die Richtungsangabe 5 enthaltende Pfeil ergibt sich aufgrund einer Projektion einer Vielzahl von Lichtstrahlen, die von einem mehrere Lichtquellen 11 enthaltenen Array der Signalausgabeeinrichtung 3 emittiert wurden. Je nach der Aktivität bzw. Nichtaktivität einzelner Lichtquellen 11 innerhalb des Arrays können unterschiedliche Bilder, insbesondere Richtungsangaben, dargestellt werden. Des Weiteren kann auch vorgesehen sein, dass das Informationssignal 2 eine besondere Farbe aufweist, in bestimmten Abständen blinkt oder dergleichen.

Bezüglich insbesondere eine Projektion auf ein Hindernis 9, also auf eine vertikale oder im Wesentlichen vertikale Fläche, kann auch eine einem Beamer vergleichbare Projektionseinrichtung an dem Bodenreinigungsgerät vorgesehen sein, wobei bevorzugt auch eine automatische Fokussierung verwirklicht ist. Alternativ könnte auch mittels einer Laserdiode im Bereich einer sichtbaren Wellenlänge in einer Vielzahl von Linien, bevorzugt horizontal orientierten Linien, die dann vertikal untereinander angeordnet sind, ein Bild entsprechend aus Bildzeilen zusammengesetzt projiziert werden.

Figur 6 zeigt ein externes Gerät 6, welches in Kombination mit dem Bodenbearbeitungsgerät 1 Verwendung finden kann. Das externe Gerät 6 ist hier beispielsweise ein Mobiltelefon mit einem Display 4, auf welchem eine von dem Bodenbearbeitungsgerät 1 erstellte Umgebungskarte 7 angezeigt wird. Auf dem externen Gerät 6 ist eine Applikation installiert, welche Nachrichten über Fehlerzustände von dem Bodenbearbeitungsgerät 1 empfängt und dem Nutzer eine Hilfestellung bei dem Auffinden des Bodenbearbeitungsgerätes 1 und/ oder einer Behebung des Fehlerzustandes bietet.

Das Bodenbearbeitungsgerät 1 kann in Verbindung mit dem externen Gerät 6 beispielsweise so verwendet werden, dass der Nutzer im Falle eines Fehlerzustandes des Bodenbearbeitungsgerätes 1 zunächst eine Nachricht über das Auftreten des Fehlerzustandes auf dem externen Gerät 6 erhält. Auf dem Display 4 des externen Gerätes 6 wird eine Umgebungskarte 7 der Umgebung des Bodenbearbeitungsgerätes 1 dargestellt, in welcher unter anderem der aktuelle Standort des Bodenbearbeitungsgerätes 1 dargestellt ist. Des Weiteren stellt die auf dem externen Gerät 6 installierte Applikation mehrere Handlungsoptionen zur Auswahl, welche eine Reaktion auf den Fehlerzustand ermöglichen. Zum einen kann der Nutzer unter dem Menüpunkt "Manuelle Steuerung" eine Fernbedienung des Bodenbearbeitungsgerätes 1 derart ausführen, dass er das Bodenbearbeitungsgerät 1 beispielsweise mittels einer Joystick-Steuerung aus der eingeklemmten Stellung heraus navigiert. Gegebenenfalls können zur Behebung des Fehlerzustandes weitere angetriebene Elemente aktiviert werden, wie beispielsweise rotierende Reinigungselemente 13, um das Bodenbearbeitungsgerät 1 unter dem Hindernis 9 zu befreien. Des Weiteren kann der Nutzer den Menüpunkt "Lichtsignal" wählen. Dadurch wird eine Ausgabe eines Informationssignals 2 durch eine oder mehrere Signalausgabeeinrichtungen 3 des Bodenbearbeitungsgerätes 1 veranlasst. Das Informationssignal 2 bzw. die darin enthaltene Richtungsangabe 5 zeigen dem Nutzer den Standort des Bodenbearbeitungsgerätes 1 an, so dass der Nutzer das Bodenbearbeitungsgerät 1 aus der Situation befreien kann. Nachdem der Nutzer das Bodenbearbeitungsgerät 1 befreit hat, kann der Nutzer auf dem externen Gerät 6 die Taste "Fehler löschen" betätigen, so dass ein erneuter Betrieb des Bodenbearbeitungsgerätes 1 gestartet werden kann.

Für das Auffinden des Bodenbearbeitungsgerätes 1 an einem nicht für den Nutzer einsehbaren Standort unterhalb des Hindernisses 9 folgt der Nutzer der in dem Informationssignal 2 enthaltenen Richtungsangabe 5, welche ausgehend von dem Projektionsort 8 unter das das Bodenbearbeitungsgerät 1 einklemmende Hindernis 9 (Bett) weist.

### Liste der Bezugszeichen

- 1: Bodenbearbeitungsgerät
- 2: Informationssignal
- 3: Signalausgabeeinrichtung
- 4: Display
- 5: Richtungsangabe
- 6: Externes Gerät
- 7: Umgebungskarte
- 8: Projektionsort
- 9: Hindernis
- 10: Gehäuse
- 11: Lichtquelle
- 12: Abstandsmesseinrichtung
- 13: Reinigungselement
- 14: Rad

## Patentansprüche

1. Verfahren zum Betrieb eines sich selbsttätig innerhalb einer Umgebung fortbewegenden Bodenbearbeitungsgerätes (1), wobei eine Steuer- und Auswerteeinrichtung des Bodenbearbeitungsgerätes (1) den Betriebsstatus des Bodenbearbeitungsgerätes (1) überwacht, einen Fehlerzustand des Bodenbearbeitungsgerätes (1) erkennt und im Falle des Auftretens eines Fehlerzustands eine Ausgabe eines optischen Informationssignals (2) veranlasst, **dadurch gekennzeichnet, dass** eine optische Signalausgabeeinrichtung (3) des Bodenbearbeitungsgerätes (1) das optische Informationssignal (2) emittiert, wobei das optische Informationssignal (2) eine eine Richtungsangabe (5) darstellende Lichtprojektion erzeugt, wobei die Lichtprojektion auf einen Projektionsort (8) innerhalb der Umgebung des aktuellen Standortes des Bodenbearbeitungsgerätes (1) gerichtet wird, und wobei die Richtungsangabe (5) von dem Projektionsort (8) innerhalb der Umgebung in Richtung des aktuellen Standortes des Bodenbearbeitungsgerätes (1) zeigt.

2. Verfahren nach Anspruch 1, **dadurch gekennzeichnet, dass** das optische Informationssignal (2) emittiert wird, wenn die Steuer- und Auswerteeinrichtung ein Einklemmen, Behindern und/oder Blockieren des Bodenbearbeitungsgerätes (1), einen Ladezustand eines Akkumulators unterhalb eines definierten Mindestladezustands und/oder einen fehlerhaften Softwarestatus erkennt.

3. Verfahren nach Anspruch 1 oder 2, **dadurch gekennzeichnet, dass** die Signalausgabeeinrichtung (3) das optische Informationssignal (2) automatisch unmittelbar nach Erkennen eines Fehlerzustands emittiert.

4. Verfahren nach Anspruch 1 oder 2, **dadurch gekennzeichnet, dass** die Steuer- und Auswerteeinrichtung im Falle eines Fehlerzustands eine Nachricht über den Fehlerzustand an ein in Kommunikationsverbindung mit dem Bodenbearbeitungsgerät (1) stehendes externes Gerät (6) sendet, wobei der Nutzer mittels des externen Gerätes (6) manuell eine Ausgabe eines Informationssignals (2) durch die Signalausgabeeinrichtung (3) des Bodenbearbeitungsgerätes (1) veranlasst.

5. Verfahren nach einem der vorhergehenden Ansprüche, **dadurch gekennzeichnet, dass** die Steuer- und Auswerteeinrichtung eine aktuelle Position und Orientierung des Bodenbearbeitungsgerätes (1) anhand einer Umgebungskarte (7) erkennt, Umgebungsinformationen im Bereich des Bodenbearbeitungsgerätes (1) auswertet und das optische Informationssignal (2) an einen Projektionsort (8) der Umgebung projiziert, welcher bezogen auf eine Größe und Richtung der Lichtprojektion frei von Hindernissen (9) ist und/oder aus einer Vogelperspektive einsehbar ist.

6. Verfahren nach Anspruch 5, **dadurch gekennzeichnet, dass** die Steuer-und Auswerteeinrichtung eine Signalausgabeeinrichtung (3) aus einer Mehrzahl von-Signalausgabeeinrichtungen (3) des Bodenbearbeitungsgerätes (1) auswählt, wobei die ausgewählte Signalausgabeeinrichtung (3) nächstgelegen zu dem Projektionsort (8) ist.

7. Verfahren nach einem der vorhergehenden Ansprüche, **dadurch gekennzeichnet, dass** die Signalausgabeeinrichtung (3) für die Projektion des optischen Informationssignals (2) an den Projektionsort (8) relativ zu einem Gehäuse (10) des Bodenbearbeitungsgerätes (1) verlagert wird und/oder dass das von einer Lichtquelle (11) der Signalausgabeeinrichtung (3) emittierte optische Informationssignal (2) mittels einer optischen Umlenkeinrichtung umgelenkt wird.

8. Sich selbsttätig innerhalb einer Umgebung fortbewegendes Bodenbearbeitungsgerät (1) mit einer Steuer- und Auswerteeinrichtung, welche eingerichtet ist, einen Betriebsstatus des Bodenbearbeitungsgerätes (1) zu überwachen, einen Fehlerzustand des Bodenbearbeitungsgerätes (1) zu erkennen und im Falle des Auftretens eines Fehlerzustands eine Ausgabe eines optischen Informationssignals (2) zu veranlassen, **dadurch gekennzeichnet, dass** das Bodenbearbeitungsgerät (1) eine optische Signalausgabeeinrichtung (3) aufweist, welche eingerichtet ist, das optische Informationssignal (2) zu emittieren, wobei das optische Informationssignal (2) eine eine Richtungsangabe (5) darstellende Lichtprojektion erzeugt, wobei die Lichtprojektion auf einen Projektionsort (8) innerhalb der Umgebung des aktuellen Standortes des Bodenbearbeitungsgerätes (1) gerichtet wird, und wobei die Richtungsangabe (5) von dem Projektionsort (8) innerhalb der Umgebung in Richtung des aktuellen Standortes des Bodenbearbeitungsgerätes (1) zeigt.

9. Bodenbearbeitungsgerät (1) nach Anspruch 8, **dadurch gekennzeichnet, dass** die Signalausgabeeinrichtung (3) eine Vielzahl von Lichtquellen (11) und/oder eine Lichtquelle (11) mit einer veränderlichen Blende aufweist.

10. Bodenbearbeitungsgerät (1) nach Anspruch 8 oder 9, **dadurch gekennzeichnet, dass** die Signalausgabeeinrichtung (3) relativ zu einem Gehäuse (10) des Bodenbearbeitungsgerätes (1) verlagerbar ist, und/oder dass die Signalausgabeeinrichtung (3) eine relativ zu dem Gehäuse (10) verlagerbare optische Umlenkeinrichtung zum Umlenken des emittierten optischen Informationssignals (2) an den Projektionsort (8) aufweist.

## Claims

1. A method for operating a floor treatment apparatus (1) that travels by itself within an environment, wherein a control and evaluation unit of the floor treatment apparatus (1) monitors the operating status of the floor treatment apparatus (1), detects an error condition of the floor treatment apparatus (1) and initiates the output of an optical information signal (2) in case an error condition occurs, **characterized in that** an optical signal output device (3) of the floor treatment apparatus (1) emits the optical information signal (2), wherein the optical information signal (2) generates a light projection that represents a directional indicator (5), wherein the light projection is directed onto a projection site (8) within the environment of the current location of the floor treatment apparatus (1), and wherein the directional indicator (5) points from the projection site (8) within the environment in the direction of the current position of the floor treatment apparatus (1).

2. The method according to claim 1, **characterized in that** the optical information signal (2) is emitted when the control and evaluation unit detects that the floor treatment apparatus (1) is jammed, impeded and/or blocked, that a charge condition of a rechargeable battery has dropped below a defined minimum charge condition and/or a faulty software status.

3. The method according to claim 1 or 2, **characterized in that** the signal output device (3) automatically emits the optical information signal (2) immediately after the detection of an error condition.

4. The method according to claim 1 or 2, **characterized in that**, in case of an error condition, the control and evaluation unit transmits a message concerning the error condition to an external device (6) that is communicatively linked to the floor treatment apparatus (1), wherein the user manually initiates the output of an information signal (2) by the signal output device (3) of the floor treatment apparatus (1) with the aid of the external device (6).

5. The method according to one of the preceding claims, **characterized in that** the control and evaluation unit detects a current position and orientation of the floor treatment apparatus (1) based on an environment map (7), evaluates environment information in the region of the floor treatment apparatus (1) and projects the optical information signal (2) on a projection site (8) of the environment, which with respect to a size and direction of the light projection is free of obstacles (9) and/or visible from a bird's eye view.

6. The method according to claim 5, **characterized in that** the control and evaluation unit selects one signal output device (3) from a plurality of signal output devices (3) of the floor treatment apparatus (1), wherein the selected signal output device (3) lies closest to the projection site (8).

7. The method according to one of the preceding claims, **characterized in that** the signal output device (3) is displaced relative to a housing (10) of the floor treatment apparatus (1) and/or that the optical information signal (2) emitted by a light source (11) of the signal output device (3) is deflected by means of an optical deflection arrangement in order to project the optical information signal (2) on the projection site (8).

8. A floor treatment apparatus (1) that travels by itself within an environment and features a control and evaluation unit, which is designed for monitoring the operating status of the floor treatment apparatus (1), detecting an error condition of the floor treatment apparatus (1) and initiating the output of an optical information signal (2) in case an error condition occurs, **characterized in that** the floor treatment apparatus (1) features an optical signal output device (3) designed for emitting an optical information signal (2), which generates a light projection that represents a directional indicator (5), wherein the optical information signal (2) generates a light projection that represents a directional indicator (5), wherein the light projection is directed onto a projection site (8) within the environment of the current location of the floor treatment apparatus (1), and wherein the directional indicator (5) points from the projection site (8) within the environment in the direction of the current position of the floor treatment apparatus (1).

9. The floor treatment apparatus (1) according to claim 8, **characterized in that** the signal output device (3) features a plurality of light sources (11) and/or a light source (11) with a variable diaphragm.

10. The floor treatment apparatus (1) according to claim 8 or 9, **characterized in that** the signal output device (3) can be displaced relative to a housing (10) of the floor treatment apparatus (1) and/or that the signal output device (3) features an optical deflection arrangement, which can be displaced relative to the housing (10), in order to deflect the emitted optical information signal (2) on the projection site (8).

## Revendications

1. Procédé de fonctionnement d'un dispositif de traitement du sol (1) qui se déplace automatiquement dans un environnement, dans lequel un dispositif de commande et d'évaluation du dispositif de traitement du sol (1) surveille l'état de fonctionnement du dispositif de traitement du sol (1), détecte un état de défaut du dispositif de traitement du sol (1) et, en cas d'apparition d'un état de défaut, provoque la sortie d'un signal d'information optique (2), **caractérisé en ce qu'**un dispositif de sortie de signal optique (3) du dispositif de traitement du sol (1) émet le signal d'information optique (2), dans lequel le signal d'information optique (2) génère une projection de lumière représentant une indication directionnelle (5), dans lequel la projection de lumière est dirigée vers un emplacement de projection (8) dans l'environnement de l'emplacement actuel du dispositif de traitement du sol (1), et dans lequel l'indication directionnelle (5) pointe de l'emplacement de projection (8) dans l'environnement en direction de l'emplacement actuel du dispositif de traitement du sol (1).

2. Procédé selon la revendication 1, **caractérisé en ce que** le signal d'information optique (2) est émis lorsque l'appareil de commande et d'évaluation détecte un coincement, une obstruction et/ou un blocage du dispositif de traitement du sol (1), un état de charge d'un accumulateur ou batterie inférieur à un état de charge minimal défini et/ou un état logiciel défectueux.

3. Procédé selon la revendication 1 ou 2, **caractérisé en ce que** le dispositif de sortie de signal (3) émet automatiquement le signal d'information optique (2) immédiatement après avoir détecté un état de défaut.

4. Procédé selon la revendication 1 ou 2, **caractérisé en ce que**, en cas d'état de défaut, le dispositif de commande et d'évaluation envoie un message concernant l'état de défaut à un dispositif externe (6) qui est en liaison de communication avec le dispositif de traitement du sol (1), dans lequel l'utilisateur déclenche manuellement, au moyen du dispositif externe (6), une sortie d'un signal d'information (2) par le dispositif de sortie de signal (3) du dispositif de traitement du sol (1).

5. Procédé selon l'une des revendications précédentes, **caractérisé en ce que** le dispositif de commande et d'évaluation détermine une position et une orientation actuelles du dispositif de traitement du sol (1) à l'aide d'une carte de l'environnement (7), évalue des informations concernant l'environnement dans la zone du dispositif de traitement du sol (1) et projette le signal d'information optique (2) sur un emplacement de projection (8) de l'environnement qui, par rapport à une taille et à une direction de la projection lumineuse, est libre d'obstacles (9) et/ou est visible en vue d'oiseau.

6. Procédé selon la revendication 5, **caractérisé en ce que** le dispositif de commande et d'évaluation sélectionne un dispositif de sortie de signal (3) parmi une pluralité de dispositifs de sortie de signal (3) du dispositif de traitement du sol (1), dans lequel le dispositif de sortie de signal (3) sélectionné est le plus proche de l'emplacement de projection (8).

7. Procédé selon l'une des revendications précédentes, **caractérisé en ce que** le dispositif de sortie de signal (3) pour la projection du signal d'information optique (2) sur l'emplacement de projection (8) est déplacé par rapport à un boîtier (10) du dispositif de traitement du sol (1) et/ou que le signal d'information optique (2) émis par une source lumineuse (11) du dispositif de sortie de signal (3) est dévié au moyen d'un dispositif de déviation optique.

8. Dispositif de traitement du sol (1) qui se déplace automatiquement dans un environnement, comportant un dispositif de commande et d'évaluation qui est conçu pour surveiller un état de fonctionnement du dispositif de traitement du sol (1), pour détecter un état de défaut du dispositif de traitement du sol (1) et pour provoquer la sortie d'un signal d'information optique (2) en cas d'apparition d'un état de défaut, **caractérisé en ce que** le dispositif de traitement du sol (1) comporte un dispositif de sortie de signal optique (3) qui est agencé pour émettre le signal d'information optique (2), dans lequel le signal d'information optique (2) génère une projection lumineuse représentant une indication directionnelle (5), dans lequel la projection lumineuse est dirigée vers un emplacement de projection (8) dans l'environnement de l'emplacement actuel du dispositif de traitement du sol (1), et dans lequel l'indication directionnelle (5) pointe de l'emplacement de projection (8) dans l'environnement en direction de l'emplacement actuel du dispositif de traitement du sol (1).

9. Dispositif de traitement du sol (1) selon la revendication 8, **caractérisé en ce que** le dispositif de sortie de signal (3) comprend une pluralité de sources lumineuses (11) et/ou une source lumineuse (11) à ouverture variable.

10. Dispositif de traitement du sol (1) selon la revendication 8 ou 9, **caractérisé en ce que** le dispositif de sortie de signal (3) est déplaçable par rapport à un boitier (10) du dispositif de traitement du sol (1), et/ou **en ce que** le dispositif de sortie de signal (3) comprend un dispositif de déviation optique déplaçable par rapport au boitier (10) pour dévier le signal d'information optique émis (2) vers l'emplacement de projection (8).
